# EUROPEAN PATENT APPLICATION

(11) **EP 4 456 249 A1**
(43) Date of publication of application: **30.10.2024**
(21) Application number: 23211571.7
(22) Date of filing: 22.11.2023
(51) Int. Cl.: H01M 10/42, H01M 50/204, H01M 50/209, H01M 50/342, H01M 50/375

(54) **BATTERY PACK**

(30) Priority: 28.04.2023 CN 202310483336; 28.04.2023 CN 202321020695 U
(71) Applicant: Eve Energy Co. Ltd., Huizhou, Guangdong 516000 (CN)
(72) Inventor: XING, Jianguang, Guangdong, 516000 (CN); CHEN, Zhiwei, Guangdong, 516000 (CN); CHEN, Chaohai, Guangdong, 516000 (CN)
(74) Representative: GLP S.R.L.

(57) **Abstract**

Disclosed in the present application is a battery pack, including: a battery module, wherein a first side of the battery module is provided with an explosion-proof valve; and a battery management system (BMS), wherein the BMS is provided on a second side of the battery module. The BMS and the explosion-proof valve of the battery module are arranged with an avoidance way, which effectively prevents the impact on the BMS when thermal runaway occurs in the battery module, and ensures the normal operation of the alarm function of the BMS.

## Description

The present application claims priority of Chinese Patent Application No.202310483336.7 filed on April 28, 2023 before CNIPA, and Chinese Patent Application No.202321020695.0 filed on April 28, 2023 before CNIPA. All the above are hereby incorporated by reference in their entirety.

### Field

The present application relates to the technical field of batteries, in particular to a battery pack.

### Background

The battery management system (BMS) is usually located in the ejection direction of the explosion-proof valve of the battery module, and is first to suffer impact damage when thermal runaway occurs in the battery.

Therefore, after thermal runaway occurs in the battery, the BMS is damaged and is unable to alarm and provide alarm signals for thermal runaway, which fails to meet the safety requirements for the operation of the battery.

### Summary

In order to overcome at least one of defects of the related art mentioned above, provided in the present application is a battery pack. The BMS and the explosion-proof valve of the battery module are arranged with an avoidance way, which effectively prevents the impact on the BMS when thermal runaway occurs in the battery module, and ensures the normal operation of the alarm function of the BMS.

Provided in an embodiment of the present application is a battery pack, including:
a battery module, wherein a first side of the battery module is provided with an explosion-proof valve; and
a battery management system (BMS), wherein the BMS is provided on a second side of the battery module.

In some implementations, an isolation plate is provided between the battery module and the BMS.

In some implementations, the BMS is provided on the isolation plate.

In some implementations, the battery pack also includes a box; the battery module and the BMS are provided in the box, the explosion-proof valve (2) is provided on an outer side of the box (4).

In some implementations, the battery module is laid horizontally in the box.

In some implementations, the box includes an upper cover and a lower box; the upper cover is closed over the lower box to form a mounting space therebetween; the battery module is provided in the mounting space; and
a reinforcing rib is provided on the upper cover and/or the lower box.

In some implementations, the upper cover and the lower box are provided with an electrode-column mounting hole respectively; a convex rib is provided on a perimeter of the electrode-column mounting hole.

In some implementations, the battery pack also includes an electrode column, the electrode column being provided in the electrode-column mounting hole and connected to the BMS; and
the electrode column is a double-headed bolt.

In some implementations, a filler is provided between the battery module and an interior wall of the box, and the filler is configured to absorb thickness tolerances and provide an initial pretightening force.

In some implementations, the battery pack also includes a low-voltage connector;
the low-voltage connector is provided on the upper cover and connected to the BMS.

The beneficial effects of the present application are as follows:
(1) The BMS is provided on one of the sides of the battery module without explosion-proof valves. When thermal runaway occurs in battery module, the electrolyte is ejected out from the explosion-proof valve. Since the BMS is not on the ejection direction of the electrolyte, the BMS is not impacted directly and the function of the BMS is not damaged, so that the thermal runaway alarm may be carried out, so as to detect the thermal runaway accident of the battery module in time. The BMS and the explosion-proof valve of the battery module are arranged with an avoidance way, which effectively prevents the impact and damage on the BMS when thermal runaway occurs in the battery module, and ensures the normal operation of the alarm of the BMS.
(2) The isolation plate serves the following purposes: firstly, the isolation plate isolates the battery module and the BMS, that is, the electrically charged battery module is isolated for insulation purposes; secondly, the isolation plate may block the impact from the thermal runaway to prevent the BMS from damaging when thermal runaway occurs in the battery module; thirdly, the BMS is provided on the isolation plate, so that the isolation plate plays a role of fixation for the BMS.
(3) A reinforcing rib is provided on the upper cover and/or the lower box. Reinforcing ribs are used to resist the expansion forces of the battery module when it breaths and expands, so as to enhancing the strength of the upper cover and the lower box, which improve the operating safety of the battery pack and also provides a pretightening force for the battery module.
(4) A convex rib is provided on a perimeter of the electrode-column mounting hole. The convex rib enhances the strength of the perimeter of the electrode-column mounting hole, which effectively prevents the deformation of the electrode-column mounting hole and prevents the problem that the electrode column is unable to be mounted to the electrode-column mounting hole.
(5) The electrode column is a double-headed bolt. Both ends of the double-headed bolt may achieve threaded connection, which facilitates the assembly and disassembly of the electrode column.
(6) A filler is provided between the battery module and an interior wall of the box, and the filler may be used for absorbing thickness tolerances and providing an initial pretightening force.

### Brief description of the drawings

Fig. 1 is a structural diagram of an interior of some embodiments in the present application;
Fig. 2 is a structural diagram of some embodiments in the present application;
Fig. 3 is an exploded diagram of some embodiments in the present application.

The meanings of the attached markings are as follows:
1 battery module; 2 explosion-proof valve; 3 BMS; 4 box; 41 upper cover; 42 lower box; 5 reinforcing rib; 6 connection piece; 7 electrode column; 8 low-voltage connector; 9 silicone foam; 10 positioning column; 11 fixing piece; 12 isolation plate; 13 convex rib.

### Detailed description of the preferred embodiments

### Embodiment 1

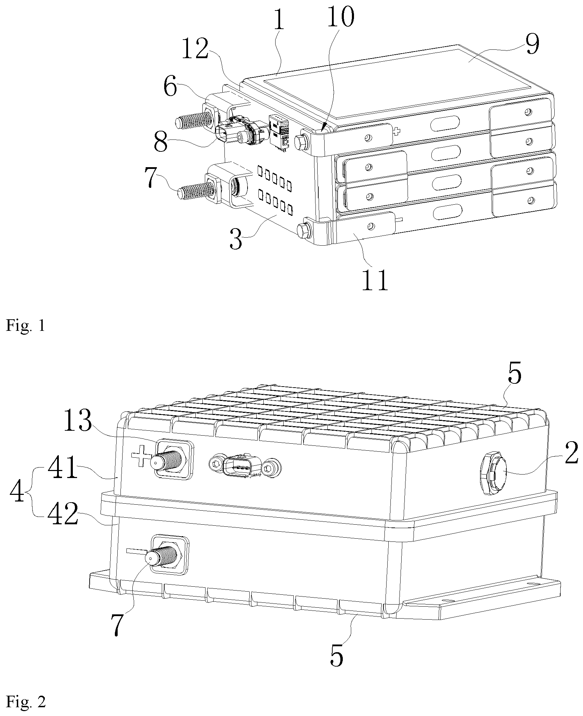

Referring to Fig. 1, Fig. 2 and Fig. 3, disclosed in the present application is a battery pack, including a box 4, a battery module 1, a BMS 3 and a low-voltage connector 8.

The box 4 includes an upper cover 41 and a lower box 42, the upper cover 41 being closed over the lower box 42 to form a mounting space therebetween.

The battery module 1 of the present embodiment is a cubic module, and it is known that two of the four peripheral sides of the battery module 1 are large surfaces of the battery module 1, the battery module 1 being provided in the mounting space mentioned above.

Additionally, a top surface of the battery module 1 is provided with an explosion-proof valve 2 used for pressure relief when thermal runaway occurs in the battery module 1. In one embodiment, the explosion-proof valve 2 penetrates and is provided on the upper cover 41. Thus, the side of the top surface of the battery module 1 is a first side of the battery module 1.

The BMS 3 is provided on one of the sides of the battery module 1 without explosion-proof valves 2, and the BMS is connected to the battery module 1. It is to be known from the prior art that, the sides of the battery module 1 without explosion-proof valves 2 include a bottom surface of the battery module 1 and four peripheral lateral surfaces perpendicular to the bottom surface, wherein two of them are large surfaces of the battery module 1. Therefore, the BMS 3 may be provided on one of the bottom surface and four peripheral lateral surfaces of the battery module 1. Thus, one of the bottom surface and four peripheral lateral surfaces of the battery module 1 may be a second side of the battery module 1.

In one embodiment, in order to reduce the overall height of the battery pack, the mounting method of the battery module 1 in the box 4 is that the battery module 1 is laid horizontally. In one embodiment, one of the large surfaces of the battery module 1 provided as a bottom supporting surface of the battery module 1 is placed on an interior bottom surface of the lower box 42. Correspondingly, the explosion-proof valve 2 is provided on a sidewall of the upper cover 41, and the ejection direction thereof is horizontal.

BMS 3 is provided on one side of the battery module 1. Preferably, the BMS 3 is provided vertically. In one embodiment, the BMS 3 is provided vertically on one of the two peripheral lateral surfaces that are not large surfaces of the battery module 1.

Finally, the upper cover 41 is closed over the lower box 42. Additionally, the connection between the upper cover 41 and the lower box 42 includes, but is not limited to, the following: a) the upper cover 41 and the lower box 42 are sealed and connected in the middle by a sealant; b) the upper cover 41 and the lower box 42 are connected by bolts, and a sealant is added on the connection between them to bond and seal; c) the upper cover 41 and the lower box 42 are connected by bolts, and a sealing ring is provided on the connection between them to enhance the sealing of the cover closure of the upper cover 41 and the lower box 42.

It is to be known from the above that the BMS 3 is provided on one of the sides of the battery module 1 without explosion-proof valves 2. When thermal runaway occurs in the battery module 1, the electrolyte is ejected out from the explosion-proof valves 2. Since the BMS is not on the ejection direction of the electrolyte, the BMS is not impacted first, so that the thermal runaway alarm may be carried out in case the BMS 3 is not damaged, so as to detect the thermal runaway accident of the battery module in time.

In one embodiment, in order to better insulate the BMS 3 and the battery module 1, and minimize the impact and damage on BMS 3 when thermal runaway occurs in the battery module 1, in the present embodiment, an isolation plate 12 is provided between the battery module 1 and the BMS 3, the isolation plate 12 being provided on the battery module 1. The isolation plate 12 is used for isolating the BMS 3 and the battery module 1, so as to achieve the isolated insulation. In one embodiment, the isolation plate 12 is made of heat-resistant insulating plastic.

Other implementable embodiments also include: the BMS 3 may be provided on the isolation plate 12. In one embodiment, positioning columns 10 are provided at all four corners of the isolation plate 12; the positioning columns 10 are provided with positioning screw holes; four positioning holes corresponding to the positioning columns 10 are correspondingly provided on the BMS 3; and the positioning bolts penetrate the positioning holes and are screwed into the positioning screw holes to secure the BMS 3 to the positioning columns 10.

In another embodiment, dimensions of the isolation plate 12 are greater than or equal to dimensions of the BMS 3, so as to ensure that the isolation plate 12 may fully cover the BMS 3.

The low-voltage connector 8 may be provided on the upper cover 41 or on the lower box 42. The present embodiment is exemplified by the low-voltage connector 8 being provided on the upper cover 41. An end of the low-voltage connector 8 passes through the upper cover 41 and is connected to the BMS 3 by a wiring harness. An opposite end of the low-voltage connector 8 is provided outside the box 4 for connecting to an external circuit. Two sides of the low-voltage connector 8 are fixedly connected to the upper cover 41 by screws respectively.

In some implementations, in order to ensure that the battery module 1 is mounted in the box 4 stably, the battery pack also includes a filler, and the filler is provided between the battery module and an interior wall of the box. In one embodiment, filler is provided on a side of the bottom surface of the battery module 1, on a side of the peripheral lateral surface opposite to the BMS, on the bottom of the large surface of the battery module 1 provided in the lower box 42, and on the top of the large surface of the battery module 1 close to the upper cover 41. Finally, the upper cover 41 is closed over the lower box 42. The filler is provided between the battery module 1 and an interior wall of the box 4; the filler is used for absorbing thickness tolerances between the interior wall of the box 4 and the battery module 1; and the filler provides a pretightening force to the battery module 1 after the upper cover 41 is closed. In one embodiment, the filler may be, but is not limited to, silicone foam 9.

According to the properties of the battery pack, it is to be known that, when using the battery pack, expansion and other conditions may occur in the battery module 1. If the box 4 is not strong enough, the box 4 is unable to absorb or withstand the expansion force of the battery module 1. Therefore, in the present embodiment, a reinforcing rib 5 is provided on the upper cover 41 and the lower box 42. In one embodiment, reinforcing ribs 5 are provided on a top surface of the upper cover 41 and a bottom surface of the lower box 42. Preferably, the reinforcing ribs 5 include transverse ribs and vertical ribs. The transverse ribs and the vertical ribs are provided in an intersection. In one embodiment, the transverse ribs and the vertical ribs are intersected perpendicularly.

Additionally, a reinforcing rib 5 may also be provided on an exterior sidewall of the upper cover 41 and the lower box 42.

### Embodiment 2

On the basis of the Embodiment 1, referring to Fig. 2, electrode-column mounting holes are provided on the upper cover 41 and the lower box 42. In one embodiment, the electrode-column mounting holes are provided on a lateral surface of the upper cover 41 and the lower box 42 that is close to the BMS 3. Electrode columns 7 are mounted in the electrode-column mounting holes; an end of the electrode column is connected to the BMS 3; and an opposite end of the electrode column extends outside the box 4.

Preferably, in the present embodiment, the electrode column 7 is a double-headed bolt. In one embodiment, the electrode column 7 includes a middle round step, and both ends of the middle round step are provided with a stud respectively, so that the double-headed bolt is formed.

A connection piece 6 is provided on a side of the BMS 3 close to the electrode-column mounting hole. The connection piece 6 is provided with a screw hole for threading the electrode column 7. After the upper cover 41 is closed over the lower box 42, the electrode-column mounting holes are aligned with the screw holes of the connection piece 6. An end of the electrode column 7 passes through the electrode-column mounting hole from the outside to the inside and is threaded in the screw hole of the connection piece 6. Then, the middle round step is in the electrode-column mounting hole. An opposite end of the electrode column 7 is outside the box 4. After an external circuit is wound around and connected to the electrode column 7, by screwing a nut to an exterior end of the electrode column 7, the external circuit is fixed to the electrode column 7. It is to be noted that two electrode columns 7 are provided with two connection piece 6 correspondingly. According to the prior art, it is to be known that one of the two electrode columns 7 is a positive electrode, and the another one thereof is a negative electrode. The positions of the electrode columns 7 with a positive electrode or a negative electrode may be arranged according to the circuit requirements of the battery pack. In the present embodiment, the electrode column 7 with a positive electrode is provided on the upper cover 41, and the electrode column 7 with a negative electrode is provided on the lower box 42.

The provision of the electrode-column mounting holes may also include: two electrode-column mounting holes may be both provided on the upper cover 41 or the lower box 42. The two provisions of the electrode-column mounting holes only require to adjust the position of the connection piece 6 correspondingly on the BMS 3, which is not repeated hereby.

In some embodiments, in order to ensure the electrode column 7 to be stably mounted into the electrode-column mounting hole, insulating fixing adhesive is injected to the electrode-column mounting hole to seal the electrode-column mounting hole, and the electrode column 7 is also fixed. In one embodiment, the insulating fixing adhesive is epoxy resin adhesive. Additionally, red epoxy resin adhesive may be used for the electrode column 7 with a positive electrode, and blue epoxy resin adhesive may be used for the electrode column 7 with a negative electrode, so that the electrode column 7 with a positive electrode or a negative electrode may be distinguished from the exterior.

In some implementations, a convex rib 13 is provided on a perimeter of the electrode-column mounting hole. In one embodiment, the convex rib 13 is a ring-shaped protrusion and provided on an exterior end of the electrode-column mounting hole. The role of the convex rib 13 mentioned above is to enhance the strength of the peripheral side of the electrode-column mounting hole and effectively prevent the deformation of the electrode-column mounting hole.

### Embodiment 3

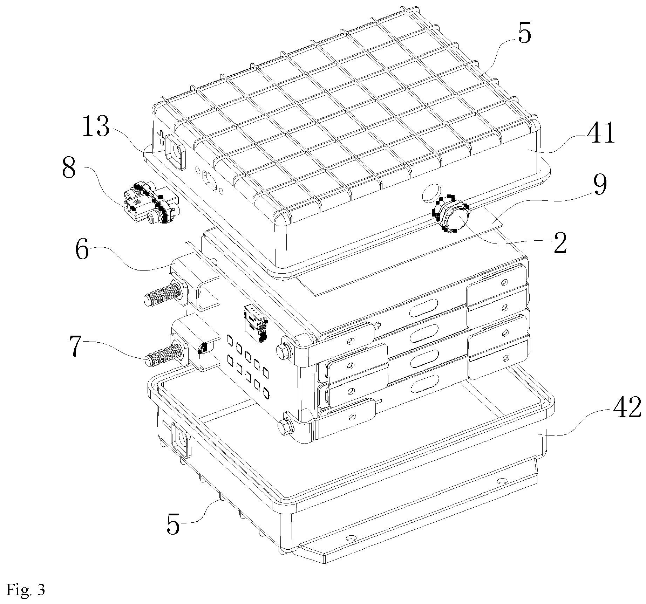

On the basis of the Embodiment 1 and Embodiment 2, referring to Fig. 3, the battery pack also includes a fixing piece 11. In one embodiment, the fixing piece 11 is L-shaped, and an end of the fixing piece 11 is connected to the battery module 1. An opposite end of the fixing piece 11 is provided with a fixing hole. After the fixing hole is aligned with the positioning hole, a positioning bolt passes through the fixing hole, positioning hole simultaneously and is finally threaded to the positioning column 10. The fixing piece 11 is used for improving the stability for mounting and fixing the BMS 3.

## Claims

1. A battery pack, comprising:
a battery module (1), wherein a first side of the battery module (1) is provided with an explosion-proof valve (2); and
a BMS (3), wherein the BMS (3) is provided on a second side of the battery module (1).

2. The battery pack according to claim 1, wherein an isolation plate (12) is provided between the battery module (1) and the BMS (3).

3. The battery pack according to claim 2, wherein the BMS (3) is provided on the isolation plate (12).

4. The battery pack according to claim 1, further comprising a box (4); the battery module (1) and the BMS (3) are provided in the box (4); and the explosion-proof valve (2) is provided on an outer side of the box (4).

5. The battery pack according to claim 4, wherein the battery module (1) is laid horizontally in the box (4).

6. The battery pack according to claim 4, wherein the box (4) comprises an upper cover (41) and a lower box (42); the upper cover (41) is closed over the lower box (42) to form a mounting space therebetween; the battery module (1) is provided in the mounting space; and
a reinforcing rib (5) is provided on the upper cover (41) and/or the lower box (42).

7. The battery pack according to claim 6, further comprising: an electrode column (7), the upper cover (41) and the lower box (42) are provided with an electrode-column mounting hole respectively, and the electrode column (7) is provided in the electrode-column mounting hole; a convex rib (13) is provided on a perimeter of the electrode-column mounting hole.

8. The battery pack according to claim 7, wherein the electrode column (7) is connected to the BMS (3); and
the electrode column (7) is a double-headed bolt.

9. The battery pack according to claim 4, wherein a filler is provided between the battery module (1) and an interior wall of the box (4), and the filler is configured to absorb expansion stress and provide an initial pretightening force.

10. The battery pack according to claim 6, further comprising: a low-voltage connector (8); and the low-voltage connector (8) is provided on the upper cover (41) and connected to the BMS (3).

11. The battery pack according to claim 3, further comprising positioning columns (10), wherein the positioning columns (10) are provided at all four corners of the isolation plate (12).

12. The battery pack according to claim 11, wherein the positioning columns (10) are provided with positioning screw holes; four positioning holes corresponding to the positioning columns (10) are correspondingly provided on the BMS (3); and positioning bolts penetrate the positioning holes and are screwed into the positioning screw holes to secure the BMS (3) to the positioning columns (10).

13. The battery pack according to claim 11, further comprising a fixing piece (11), wherein an end of the fixing piece (11) is connected to the battery module (1); an opposite end of the fixing piece (11) is provided with a fixing hole.

14. The battery pack according to claim 13, wherein the fixing piece (11) is L-shaped.

15. The battery pack according to claim 7, wherein a convex rib (13) is provided on a perimeter of the electrode-column mounting hole, and the convex rib (13) is a ring-shaped protrusion and provided on an exterior end of the electrode-column mounting hole.
